Europäisches Patentamt

European Patent Office

Office européen des brevets

(11) Publication number: **0 437 191 A1**

## (12) EUROPEAN PATENT APPLICATION

(21) Application number: **90850427.7**

(22) Date of filing: **28.12.90**

(51) Int. Cl.5: **A01D 45/00**, A01D 90/04, A01D 37/04

(30) Priority: **12.01.90 SE 9000107**

(43) Date of publication of application:
**17.07.91 Bulletin 91/29**

(84) Designated Contracting States:
**AT BE CH DE DK ES FR GB GR IT LI LU NL SE**

(71) Applicant: **Granlind, Ingmar**
**Skogshemsvägen 14**
**S-146 00 Tullinge(SE)**

(72) Inventor: **Granlind, Ingmar**
**Skogshemsvägen 14**
**S-146 00 Tullinge(SE)**

(74) Representative: **Lindblom, Erik J.**
**Skördevägen 88**
**S-122 35 Enskede(SE)**

(54) **Agricultural vehicle.**

(57) The invention relates to a vehicle (1) intended for harvesting growing plants and enabling the thus harvested plants to be temporarily stored. The vehicle is provided with plant harvesting or cutting device (2), a conveyor unit (3), which functions to move the plants cut by the cutting device to a magazine (4) and with the cutting device (2) located first, as seen in the direction of vehicle movement, and the magazine (4) located last, and in which the cutting device (2) and the conveyor means (3) belonging to said conveyor unit (3a,3b) are arranged centrally in relation to the vehicle (1). The cutting device (2) and the conveyor means (3a,3b) coact mutually with one another such that a cut plant is transported centrally in relation to the vehicle along a slightly upwardly directed path (4a) with respective plants in a standing position and the magazine (4) is positioned so as to receive immediately the plants advanced by the conveyor means.

Fig. 1.

EP 0 437 191 A1

## AN AUTOMOTIVE VEHICLE

TECHNICAL FIELD

The present invention relates to an automotive vehicle, and then particularly, but not exclusively, to a vehicle intended for harvesting or cutting plants, successively collecting the harvested plants, and temporarily storing the cut plants.

Such a vehicle will be equipped with means for harvesting or cutting the plants at their root end, and conveyor means for transporting the cut plants sequentially to a magazine, with the cutting means located first and the magazine located last as seen in the direction of movement of the vehicle. The plant cutting means and the conveyor means are positioned centrally in relation to the vehicle.

Vehicles of this kind are used to harvest, recover and subsequently process cultivatable plants, such as energy forests, sugar cane and the like, in a rational manner.

BACKGROUND PRIOR ART

Several different types of vehicle of the aforesaid kind are known to the art, and particularly vehicles in which the plant cutting means and the plant conveying means are arranged centrally in relation to the vehicle.

For instance, the Swedish Patent Application No. 80 02944-0 teaches a plant cutting and plant bundling machine in which it is necessary to move the cut and bundled plants upwardly and to rotate said bundles through an angle slightly less than 90°.

The advantage afforded by this machine is that the driver of the vehicle can see clearly straight ahead, since the plants, immediately upon being cut, are moved to one side into laterally arranged collecting pockets, from which they are later collected and transported, by a conveyor means, centrally across the machine, or tractor, and are discharged centrally rearwards from the tractor, either onto the ground between the rows of plants, or on a trailer following the vehicle.

It has been established that this machine, and similar machines in which plant bundles must first be moved upwards and then centrally over the tractor, suffer certain drawbacks, since the plant bundles must be rotated in addition to being raised.

It is also known to use a conveyor means which is inclined steeply in an upward direction in order to enable the cut plants to be transported in an upright position over the vehicle, and thereafter rotate the plants so that they can be placed in a storage magazine. For practical reasons, the conveyor means is normally inclined at an angle greater than 30°.

Other vehicles are known in which the plant cutting or plant harvesting means and the conveying means are located on one side of the vehicle, and in which the cut plants are advanced sequentially by a curved, slightly upwardly inclined conveyor means to a magazine which is located centrally behind the vehicle, of a tractor.

Although this machine enables cut plants to be conveyed in an upstanding position immediately to a magazine, along a curved conveyor path exhibiting a small lifting height, the use of the vehicle is nevertheless restricted, since when using this machine plants must always be cut from one edge region or strip region.

DISCLOSURE OF THE INVENTION

TECHNICAL PROBLEMS

When considering the present state of the art as described above, it will be seen that a technical problem resides in enabling plants to be cut, successively collected and temporarily stored through particular coaction between the plant cutting means and the plant conveying means, such that each cut plant will be conveyed centrally in relation to the vehicle, along a slightly upward, straight path with each plant in a standing position, as opposed to a recumbent or lying position, and of enabling the magazine to be positioned centrally in relation to the vehicle and capable of receiving immediately the plants advanced by the conveying means, without needing to position the magazine high above the level of the ground and lifting the cut plants to a corresponding extent.

When realizing those advantages that are afforded by a straight conveyor path from the plant cutting means, and by positioning the conveyor means centrally in relation to the vehicle, it will be seen that a technical problem resides in the possibility of storing cut plants in an upstanding position immediately in a storage magazine, without needing to lift bundled plants.

It will also be seen that a technical problem is one of providing conditions and of constructing the conveying means in a manner such that the cut plants are given a particular orientation and inclination in relation to the horizontal plane during their slightly, upwardly inclined passage to the magazine.

It will also be seen that a technical problem resides in realizing the possibilities of positioning the conveyor means between a driver's cabin and a vehicle power-plant unit, therewith affording the driver the unique possibility of monitoring the cutting means and the conveyor means while in operation during the process of cutting plants and transporting said plants to the magazine.

It will also be seen that another technical problem is one of realizing those advantages that are afforded when the magazine is located immediately behind the driver's cabin and said unit, since the volumetric capacity of the magazine can then include the full width of the vehicle and at least approximately half the length of said vehicle.

Another technical problem in the present regard is one of realizing those advantages that are afforded when the cutting means, the conveying means and the magazine are firmly held and mutually coupled by a framework structure which is pivotally attached to a rear part of the vehicle, thereby affording the advantage that when the framework structure is swung to an upwardly lifted position, the plants, optionally bundled upstanding plants, present in the magazine are tipped therefrom.

It will also be seen that a technical problem resides in realizing those advantages that are afforded when the aforesaid frame structure is attached to the vehicle with the aid of simple means which enable the whole of the frame structure to be readily removed from the vehicle.

It will also be seen that a highly qualified technical problem is one of realizing those advantages that are afforded when the vehicle comprises two mutually spaced parts, of which one part includes the driver's cabin and the other part includes the power plant, and when these vehicle parts are held together by one or more straight, transverse beam constructions positioned beneath the magazine.

A technical problem also resides in realizing that when the vehicle is fitted with such a dismantable framework or harvest module, and when the earlier mentioned beam construction is exchanged for one or more beam constructions of an inverse U-shape, the vehicle can be used for purposes other than that of cutting and temporarily storing cut plants as described above, for instance for dispersing fertilizer on young shoots or growths, with the plants placed in rows, without the vehicle damaging the plants.

SOLUTION

Thus, the present invention departs from a vehicle which is constructed particularly for harvesting or cutting growing plants, collecting said plants successively, and temporarily storing said plants, and optionally bundling the cut plants, and which is provided with a plant cutting or harvesting device, a straight conveyor unit which functions to move the plants cut by said cutting device in an upstanding position to a magazine, with the cutting device positioned first and the magazine last when seen in the movement direction of the vehicle, and in which vehicle the cutting device and conveying devices forming part of the conveying means are arranged centrally in relation to the vehicle. The invention is intended to solve one or more of the aforesaid technical problems, by permitting the cutting device and the conveyor devices to mutually coact in a manner such that a cut plant will be transported in a standing position, centrally in relation to the vehicle, along a slightly upwardly directed conveyor path which slopes at an angle smaller than 20$^\circ$ and greater than 5$^\circ$, and with the path straight, where it receives respective plants in a standing position, and by positioning the magazine so that it receives immediately the essentially straight, standing plants advanced by the conveyor unit.

As preferred embodiments which lie within the scope of the invention, it is suggested that subsequent to being cut, the plants are positioned by upper and lower conveyor devices such as to be inclined at an angle greater than 45$^\circ$ to the horizontal plane.

According to one embodiment, the straight conveyor path can be positioned between a driver's cabin and a vehicle power-plant unit.

The magazine is preferably positioned immediately behind the driver's cabin and the power-plant unit with the highest level of the bottom part of the magazine being located at a position less than 2 m above ground level and higher than 0.5 m above ground level.

It is also suggested that the cutting device, the conveyor arrangement and the magazine are held and coupled together by a frame structure which forms a harvest module and which is pivotally connected at one end to a rear part of the vehicle, so that the module can be moved between a plant-cutting or plant-harvesting position, and an upwardly raised position in which the plants present in the magazine can be tipped therefrom.

When the frame structure or harvesting module occupies an upwardly raised position, i.e. with the plant cutting devices raised considerably above ground level, the plants, optionally bundled plants, present in the magazine are tipped rearwardly therefrom.

It is also suggested that the vehicle shall consist of two mutually spaced parts, of which one part includes the driver's cabin and the other part includes the power-plant unit, and that said two parts are connected together by one or more transverse, straight beam constructions positioned beneath the magazine.

The frame structure or harvesting module shall be removable and the beam construction shall be exchangeable. When the frame structure is removed and the beam construction replaced with a beam construction of inverse-U configuration, the base vehicle can be used for purposes other than that of harvesting and temporarily storing plants.

Finally, the cutting device will preferably comprise two mutually adjacent cutting blades or corresponding cutters located close to the ground.

## ADVANTAGES

Those advantages primarily afforded with a vehicle constructed in accordance with the present invention reside in the provision of means whereby plants harvested by a cutting device are transported in a standing position centrally through the vehicle and between vehicle parts, so as to be received in a standing position in a magazine provided in the vehicle. This enables the driver to monitor the operation of the cutting device and the conveyor arrangement comfortably, while at the same time enabling the vehicle to be converted for other uses, simply by removing the frame structure or harvesting module and replacing it with a readily dismountable beam construction.

The primary characteristic features of a vehicle constructed in accordance with the present invention are set forth in the characterizing clause of the following Claim 1.

## BRIEF DESCRIPTION OF THE DRAWINGS

An exemplifying embodiment of a vehicle at present proposed and adapted for harvesting growing plants and enabling the thus harvested plants to be stored temporarily will now be described in more detail with reference to the accompanying drawing, in which

Figure 1 illustrates the vehicle in side view;

Figure 2 is a horizontal, oblique view of the vehicle illustrated in Figure 1; and

Figure 3 is a front view of the vehicle illustrated in Figure 1.

## DESCRIPTION OF EMBODIMENTS AT PRESENT PREFERRED

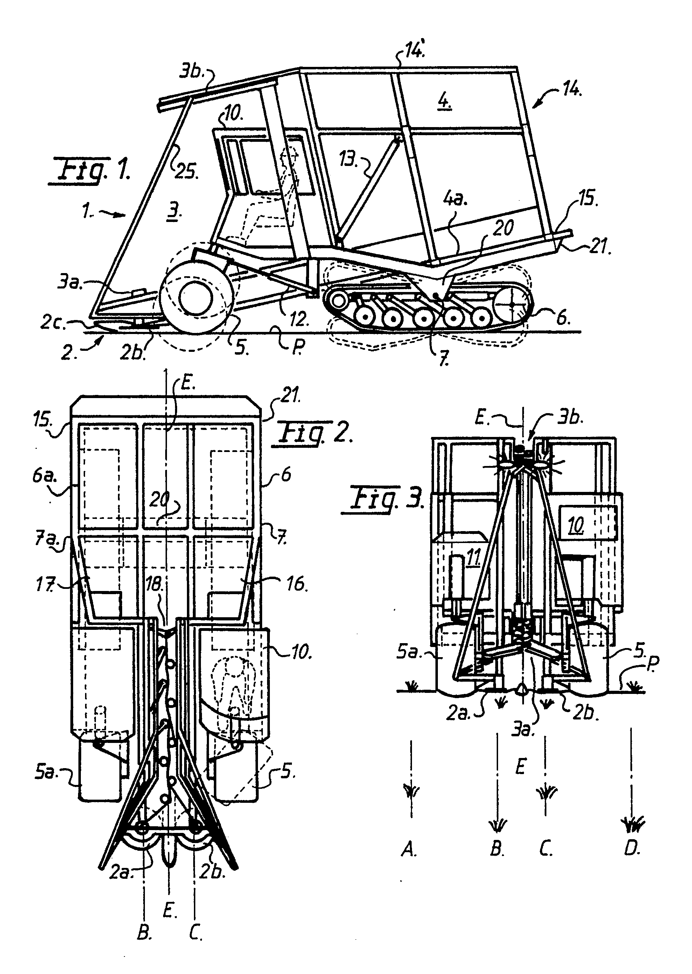

The Figures of the accompanying drawing illustrate a preferred embodiment of a vehicle 1 by means of which growing plants can be harvested continuously, particularly plants growing in rows A, B, C, D shown in Figure 3.

Figure 3 also illustrates suggested distances between the rows, i.e. a greater distance between the rows A, B and C, D, and a smaller distance between the rows B, C, and with the plants mutually offset slightly so that the plants are cut singly at their root end and are picked up singly by the conveyor unit 3.

To this end, the vehicle 1 is equipped with a plant cutting or harvesting device 2, in the form of two mutually adjacent cutting blades 2a, 2b located close to the ground, and a conveyor unit 3 which comprises a lower conveyor means 3a and an upper conveyor means 3b of known construction. The conveyor means 3a, 3b are intended to move the plants cut by the cutting device 2 in a standing but slightly inclined position to a magazine 4. When seen in the direction of movement of the vehicle, the cutting device 2 is arranged first and the magazine 4 last.

A glide means or shoe 2c is suitably mounted adjacent the cutting blades 2a, 2b, so as to glide over the ground and prevent the cutting blades 2a, 2b from coming into contact therewith. Although not shown, the vehicle may be equipped with a guide plate which functions to lift the plants slightly immediately when cut, so that the plant will not slide down into contact with the ground.

As will be seen particularly from Figure 2, the cutting blades 2a, 2b and the conveyor means 3a, 3b are arranged centrally in relation to the centre plane E of the vehicle 1.

The cutting device 2 and the conveyor unit 3 mutually coacts in a manner such that a cut plant is conveyed centrally in relation to a vertically positioned, longitudinally extending vehicle plane E and in a standing position along a slightly upwardly directed, straight conveyor path. This means that respective plants are given a standing position, e.g. a vertical, or substantially vertical position, and the magazine is intended to receive immediately those plants advanced by the conveyor unit. The plants are supported in the magazine 4 against a rearwardly and upwardly sloping support surface 4a, the highest point of which is located at a level of less than 2 metres above the vehicle supporting surface P.

The conveyor path 3a slopes upwardly at an angle of less than 20° and more than 5° to the surface of the ground, preferably at an angle of about 12°. As shown in Figure 1, the vehicle 1 is steered via front wheels 5, 5a and is driven via rear bands or tracks 6, 6a, which coact in a known manner with a boggie suspension 7, 7a.

The transport means 3a, 3b extend between a driver's cabin or driver's cabin 10 and a vehicle power-plant unit 11, this unit including vehicle drive machinery and also machinery for rotating the cutting device 2 and moving the conveyor means 3a, 3b, etc.

The plant unit 11 also incorporates means for generating hydraulic pressure for controlling the vehicle 1 through the medium of a hydraulic piston-cylinder device 12 and for operating a hydraulic piston-cylinder device 13 by means of which a frame structure 14 or harvesting module is raised and lowered.

As will best be seen from Figure 1, the cutting device 2, the conveyor unit 3 and the magazine 4 are mutually held and connected by a frame structure 14 which is pivotally connected at 15 to a rear part of the vehicle. The frame structure 14 can be moved by means of the hydraulic piston-cylinder device 13 to a raised position (not shown) in which the cutting device 2 is located above the ground surface P and in which the surface 4a is located in a rearwardly inclined position, such that the plants, optionally bundled, present in the magazine will be tipped therefrom.

Figure 2 is a horizontal view taken parallel with the plane or surface 4a, and it will be seen from the Figure that the vehicle actually comprises two mutually spaced parts 16, 17 of which one part 16 includes the driver's cabin 10 and the other part 17 includes the vehicle power-plant unit 11, and that these two parts are held together by a first beam construction 20 and a second, rear beam construction 21. The first beam construction 20 comprises a straight, transverse beam which is attached to the parts 16 and 17 by means of screw (bolt) and nut joints within the central region beneath the magazine 4. The second beam construction 21 is attached in a similar manner, thus is weaker.

It should be mentioned in particular that a vehicle constructed in accordance with the present invention can be converted for other purposes.

In those instances when the frame structure 14 or harvesting module is removed, the cutting device 2, the conveyor unit 3 and the magazine 4 are also removed, simply by removing the pivot pin 15 and disconnecting the hydraulic piston 13.

Since the beam construction 20 (and also the beam construction 21) can be readily removed, said beam construction (constructions) can thus be replaced with a different beam construction of inverse-U configuration, with the legs of the U having a length of 2 metres, thus enabling the vehicle to be driven into an area where plant growth increases and where the plant rows B and C will not only be located between the parts 16 and 17 but may also pass beneath the alternative beam constructions.

In the case of this modified vehicle, a known plant spraying device may be mounted on the upper horizontal part of the beam construction.

The illustrated conveyor means 3b is terminated adjacent the magazine 4 with a barrier means 18 which prevents plants stored in the magazine 4 from passing back onto the conveyor means.

Arms mounted in the magazine 4 function to gather or shepherd successively advanced plants into the region located adjacent the conveyor means 3b.

The upper part 14' of the frame structure 14 can be raised and lowered, and therewith also the upper conveyor means 3b. A front brace 25 is telescopically constructed.

The conveyor path shall be inclined at an angle which is smaller than 20° and greater than 5°, preferably about 10°, for instance between 8° and 15°.

It will be understood from the aforegoing that by "standing" is meant an angled position other than 180° with the horizontal, such that the plants stand with their root ends downwards.

It will also be understood that the invention is not restricted to the aforedescribed exemplifying embodiment, and that modifications can be made within the scope of the invention as defined in the following Claims.

## Claims

1. A vehicle for harvesting growing plants and temporarily storing the plants thus harvested, said vehicle being provided with a plant harvesting or cutting device, a conveyor unit which functions to move the plants cut by the cutting device to a magazine, with the cutting device located first and the magazine located last as seen in the direction of vehicle movement, and in which vehicle the cutting device and the conveyor means belonging to said conveyor unit are arranged centrally in relation to the vehicle, **characterized** in that the cutting device and the conveyor means coact mutually with one another such that a cut plant is transported centrally in relation to the vehicle along a slightly upwardly directed path with respective plants in a standing position; and in that the magazine is positioned so as to receive immediately the plants advanced by the conveyor means.

2. A vehicle according to Claim 1, **characterized** in that the plants are intended to be positioned by the conveyor means at an angle which is greater than 45° to the horizontal plane.

3. A vehicle according to Claim 1, **characterized** in that the conveyor means are positioned between a driver's cabin and a vehicle power-plant unit.

4. A vehicle according to Claim 1 or 3, **characterized** in that the magazine is located immediately behind the driver's cabin and the unit.

5.   A vehicle according to Claim 1, **characterized** in that the cutting device, the conveyor unit and the magazine are mutually held and mutually connected by a frame structure which is pivotally attached to a rear vehicle part.

6.   A vehicle according to Claim 5, **characterized** in that in a raised position of the frame structure, the bundled plants present in the magazine are tipped therefrom.

7.   A vehicle according to Claim 1 or 3, **characterized** in that the vehicle comprises two mutually spaced parts, of which one part includes the driver's cabin and the other part includes the power-plant unit, and in that said vehicle parts are held together by one or more transverse beam constructions located beneath the magazine.

8.   A vehicle according to Claim 5 or 7, **characterized** in that the frame structure is removable and in that respective beam constructions can be replaced with another beam construction of inverse-U configuration.

9.   A vehicle according to Claim 1, **characterized** in that the cutting device comprises two mutually adjacent cutting blades located close to the ground.

10.  A vehicle according to Claim 1, **characterized** in that the angle of inclination is greater than $5°$ and less than $20°$, preferably about $10°$.

*Fig. 1.*

*Fig. 2.*

*Fig. 3.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y,A | FR-A-2 628 933 (CHAMBRE D'AGRICULTURE DE MAINE-ET-LOIRE) <br> * page 1, line 27 - page 2, line 8 * * page 4, line 33 - page 6, line 5; figure 1 * | 1,2,5,10 | A 01 D 45/00 <br> A 01 D 90/04 <br> A 01 D 37/04 |
| Y | DE-A-2 937 306 (C. J. CANNAVAN) <br> * figures 1, 3 * | 5 | |
| X,A,D | EP-A-0 040 185 (ERGONOMI DESIGN GRUPPEN AB) <br> * claims 1, 2, 4; figures 1, 2 & SE-A-8002944 * | 1,9,2,10 | |
| A | FR-A-1 464 346 (THE THOMSON MACHINERY CO.) <br> * page 1, column 1; figures 1, 2 * | 1,2,10 | |
| A | GB-A-1 465 996 (W. HOLLINGSWORTH ET AL.) <br> * page 1, lines 37 - 67; figures 1, 2 * | 1,2 | |
| A | FR-A-1 164 394 (THE SUDAN GEZIRA BOARD ET AL.) | | |
| A | FR-A-1 458 055 (H. ZIJLSTRA ET AL. Ü) | | |
| A | EP-A-0 332 726 (J. BRETTHAUER ET AL.) | | |

TECHNICAL FIELDS
SEARCHED (Int. Cl.5)

A 01 D

The present search report has been drawn up for all claims

| Place of search | Date of completion of search | Examiner |
|---|---|---|
| Berlin | 08 March 91 | MERCKX A M |